# EUROPEAN PATENT APPLICATION

(11) **EP 4 733 888 A1**
(43) Date of publication of application: **29.04.2026**
(21) Application number: 25187396.4
(22) Date of filing: 03.07.2025
(51) Int. Cl.: G06F 1/16, G06T 11/00

(54) **GENERATIVE ARTIFICIAL INTELLIGENCE IMAGE GENERATION FOR WATCH FACE CUSTOMIZATION**

(30) Priority: 23.10.2024 US 202418924933
(71) Applicant: Meta Platforms, Inc., Menlo Park, CA 94025 (US)
(72) Inventor: Naidu, Raunaq Biswajeet, Menlo Park (US); Salinas, Alejandro Jose, Menlo Park (US); Virtue, Erica Jean, Menlo Park (US)
(74) Representative: Murgitroyd & Company

(57) **Abstract**

Systems, methods, and devices are described for AI platform that may utilize a machine learning model configured to generate one or more watch face images associated with a received input. In an example, systems and methods of generating one or more watch face images may include receiving an input. The input may be natural language text or audio. Based on determining the input, the machine learning model may generate one or more watch face images. An indication of a change in contextual information may initiate the machine learning model to generate a second watch face image to update a first watch face image based on the indication of the change in contextual information and the input received. The second watch face image may be provided.

## Description

### TECHNOLICAL FIELD

Examples of the present disclosure may relate generally to methods, apparatuses, and computer program products for using artificial intelligence for generating a watch face image associated with a wrist wearable device.

### BACKGROUND

Electronic devices are constantly changing and evolving to provide the user with flexibility and adaptability. As electronic devices become more versatile, users are increasingly keeping them on their person during various everyday activities. This trend has led many users to seek avenues for self-expression. For example, smartwatches have become increasingly popular wearable electronic devices. Smartwatches may offer users a convenient way to access information and interact with digital content.

### SUMMARY

Disclosed herein are methods, apparatuses, computer-readable medium, or systems using an artificial intelligence (Al) platform to generate a watch face image associated with an electronic device based on an input. In some examples, the Al platform may generate one or more watch faces images that may be changed in response to contextual factors.

According to a first aspect, there is provided a method comprising: receiving an input via a device associated with a user; generating, using a machine learning model, one or more watch face images based on the input; displaying the one or more watch face images; receiving a selection associated with the one or more watch face images; displaying the selection as a first watch face image; receiving an indication of a change in first contextual information; generating, using the machine learning model, a second watch face image based on the indication of the change in the first contextual information; and displaying the second watch face image.

The input may comprise natural language text or natural language audio describing characteristics associated with the one or more watch face images.

The one or more watch face images may comprise: one or more photorealistic watch face images, and/or one or more illustrative watch face images.

The second watch face image may be displayed on a smartwatch.

The change in the first contextual information may be based on: capturing a contextual baseline associated with a user profile; obtaining second contextual information, wherein the second contextual information comprises data associated with one or more sensors; and comparing the second contextual information to the contextual baseline.

The second watch face image may be an updated first watch face image that incorporates one or more visual elements associated with the change in the first contextual information.

The change in the first contextual information may indicate a change associated with weather information.

The change in the first contextual information may indicate a change associated with location information.

The change in the first contextual information may indicate a change associated with a time of day, user activity data, or calendar data.

The first contextual information may comprise: blood pressure data, skin temperature data, blood-oxygen data, or heart-rate data.

According to a second aspect, there is provided an apparatus comprising: one or more processors; and at least one memory storing instructions, that when executed by the one or more processors, cause the apparatus to carry out the method of the first aspect. The apparatus may comprise the device associated with the user. The apparatus may comprise a user selection input device. The apparatus may comprise a watch face image display device. The apparatus may comprise a smartwatch device.

According to a third aspect, there is provided a computer-readable medium storing instructions that, when executed by a processor, cause the processor to carry out the method of the first aspect. The medium may be non-transitory. The processor may be associated with a device comprising the device associated with the user. The processor may be associated with a user selection input device. The processor may be associated with a watch face image display device. The processor may be associated with a smartwatch device.

According to a fourth aspect, there is provided a computer program product comprising instructions which, when the program is executed by a computer, cause the computer to carry out the method of the first aspect. The computer may be associated with a device comprising the device associated with the user. The computer may be associated with a user selection input device. The computer may be associated with a watch face image display device. The computer may be associated with a smartwatch device.

Additional advantages will be set forth in part in the description which follows or may be learned by practice. The advantages will be realized and attained by means of the elements and combinations particularly pointed out in the appended claims. It is to be understood that both the foregoing general description and the following detailed description are exemplary and explanatory only and are not restrictive, as claimed.

### BRIEF DESCRIPTION OF THE DRAWINGS

The summary, as well as the following detailed description, is further understood when read in conjunction with the appended drawings. For the purpose of illustrating the disclosed subject matter, there are shown in the drawings examples of the disclosed subject matter; however, the disclosed subject matter is not limited to the specific methods, compositions, and devices disclosed. In addition, the drawings are not necessarily drawn to scale. In the drawings:
FIG. 1 illustrates an example system in accordance with the present disclosure.
FIG. 2 illustrates an example method in accordance with the present disclosure.
FIG. 3A illustrates an example implementation of the disclosed subject matter.
FIG. 3B illustrates an example implementation of the disclosed subject matter.
FIG. 3C illustrates an example implementation of the disclosed subject matter.
FIG. 3D illustrates an example implementation of the disclosed subject matter.
FIG. 4 illustrates an example implementation of the disclosed subject matter.
FIG. 5 illustrates an example method in accordance with the present disclosure.
FIG. 6 illustrates an example implementation of the disclosed subject matter.
FIG. 7 illustrates an example machine learning and training model in accordance the present disclosure.
FIG. 8 illustrates an example device in accordance with the present disclosure.

The figures depict various examples for purposes of illustration only. One skilled in the art will readily recognize from the following discussion that alternative examples of the structures and methods illustrated herein may be employed without departing from the principles described herein.

### DETAILED DESCRIPTION

Some examples of the present disclosure will now be described more fully hereinafter with reference to the accompanying drawings, in which some, but not all examples of the disclosure are shown. Indeed, various examples of the disclosure may be embodied in many different forms and should not be construed as limited to the examples set forth herein. Like reference numerals refer to like elements throughout.

As referred to herein, "watch face" may refer to a visual interface displayed on a smartwatch's screen. In some examples, a watch face may include various elements such as time and date displays, notification indicators, and complications like weather forecasts, fitness tracking data, or music controls. In some examples, watch faces may be configured to be customizable allowing for customizable or interchangeable backgrounds, fonts, or color schemes. A watch face design may be considered a scheme in which the watch face places certain images, text, or numerical values in a relatively static position in particular location or plurality of locations on the watch face.

As referred to herein, "background" may refer to the visual design or image that serves as the foundation of the visual interface of a watch face. The background may provide an aesthetic backdrop for various elements and complication presented on the screen of a smartwatch. In some examples, the background may be a static image, a dynamic animation, a live data feed, such as a photo gallery or a weather radar map, or the like. In some examples, backgrounds may be configured to be interactive.

Electronic devices are constantly changing and evolving to provide the user with flexibility and adaptability. As electronic devices become more versatile, users are increasingly keeping them on their person during various everyday activities. This trend may lead users to seek avenues for self-expression. One avenue that smartwatches may utilize to allow self-expression of users may be a customizable watch face. The customization of the watch face may allow for users to personalize the appearance of their device. While this method may allow users to customize the watch face, in some systems, the visual self-expression available to users via watch face customization options may be limited to predefined content items such as static images, images available online, predefined animated images, or the like, which may become stale over time. For instance, users may wish to change the watch face (e.g., background) depending on contextual information (e.g., environmental factors) associated with the user to further convey their unique perspective.

As wrist worn devices such as smart watches, fitness trackers, or the like are becoming increasingly common, wrist worn devices may perform many functions, including performing physiological measurements, analyzing movement activities, analyzing sleep, or determining a location.

In some examples, an artificial intelligent (AI) platform may provide methods or systems for a user to add some self-expression to an image, graphics interchange format (GIF), animated image, or the like. In an example, a method may include adding varied watch face images to a device based on any user input or context (e.g., environmental factors) associated with a user instead of or in addition to utilizing a pre-generated database of images. The system can generate animations or transitions between different watch face states based on contextual changes, not just static images. There may be collaborative filtering component where the system considers watch face preferences of users with similar profiles or in recent text exchanges when generating new designs. This introduces a social element that may be associated with social media or messaging applications. The method may provide opportunity for contextualization or creative control of watch faces. Creating ways for users to customize their watch faces may allow users to express themselves, which may lead to users having a richer and more engaging experience with the user device over time.

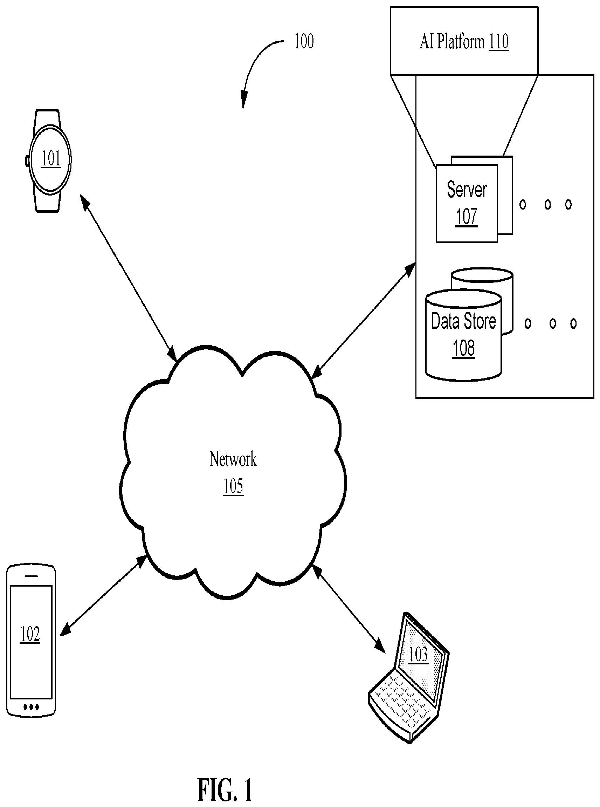

FIG. 1 illustrates an example intelligent watch face system 100, in accordance with an example of the present disclosure. The intelligent watch face system 100 may host an Al platform 110. The Al platform 110 may be associated with a native setting application of a device, a social media platform, a messaging platform, or the like. The intelligent watch face system 100 may be capable of facilitating communications among devices or provisioning of content. Intelligent watch face system 100 may include device 101, device 102, device 103, server 107, data store 108, and Al platform 110. Al platform 110 may be located on server 107. It is contemplated that Al platform 110 may be located on or interact with one or more devices of intelligent watch face system 100.

In particular examples, device 101, device 102, and device 103 may be associated with one or more user profiles and may communicate with Al platform 110. Al platform 110 may be considered a platform (e.g., a message platform, a native settings platform, or a social media platform). In particular examples, device 101, 102, 103 to access, send data to, or receive data from Al platform 110 which may be located on server 107, or the like.

This disclosure contemplates any suitable network 105. As an example, one or more portions of network 105 may include an ad hoc network, an intranet, an extranet, a virtual private network (VPN), a local area network (LAN), a wireless LAN (WLAN), a wide area network (WAN), or any combination thereof. Network 105 may comprise one or more wireline or wireless (links to facilitate communication between devices of system 10.

In particular examples, device 101, 102, 103 may be an electronic device including hardware, software, or embedded logic components or a combination of two or more such components and capable of carrying out the appropriate functionalities implemented or supported by the device 101, 102, 103. As an example, device 102, 103 may be a computer system such as a desktop computer, notebook or laptop computer, netbook, a tablet computer (e.g., smart tablet), e-book reader, global positioning system (GPS) device, personal digital assistant (PDA), handheld electronic device, cellular telephone, smartphone, augmented/virtual reality device, other suitable electronic device, or any suitable combination thereof. Device 101 may be a wearable user device that may include one or more sensors, such as a smartwatch, fitness tracker, or the like.

This disclosure contemplates any suitable device (e.g., device 101, 102, 103). A device 101, 102, 103 may enable a user to access network 105. A device 101, 102, 103 may enable a user(s) to communicate with other another device 101, 102, 103.

Al platform 110 may be a network-addressable computing system that can host an online network. Al platform 110 may generate, store, receive, or send information associated with a user, such as, for example, user-profile data or other suitable data related to the Al platform 110. Al platform 110 may be accessed by one or more components of intelligent watch face system 100 directly or via network 105. As an example, device 101 may access AI platform 110 located on server 107 by using a web browser or a native application on device 101 associated with Al platform 110 (e.g., a settings application, messaging application, a social media application, another suitable application, or any combination thereof) directly or via network 105.

Intelligent watch face system 100 may include one or more servers (e.g., server 107). Each server 107 may be a unitary server or a distributed server spanning multiple computers or multiple datacenters. Servers 107 may be of various types, such as web server, news server, mail server, message server, advertising server, file server, application server, exchange server, database server, proxy server, another server suitable for performing functions or processes described herein, or any combination thereof. Each server 107 may include hardware, software, or embedded logic components or a combination of two or more such components for carrying out the appropriate functionalities implemented or supported by server 107. Intelligent watch face system 100 may include one or more data stores (e.g., data store 108). Data stores 108 may be used to store various types of information. The information stored in data stores 108 may be organized according to specific data structures. Each data store 108 may be a relational, columnar, correlation, or other suitable database. Although this disclosure describes or illustrates particular types of databases, this disclosure contemplates any suitable types of databases. Particular examples may provide interfaces that enable device 101, 102, 103, or another system (e.g., a third-party system) to manage, retrieve, modify, add, or delete, the information stored in data store 108.

The devices 101, 102, 103 may be communicatively linked with each other directly (e.g., Bluetooth, near field communication, ultra-wideband, or any other suitable form of communicative connection) or network 105.

Al platform 110 may provide users with the ability to take actions on various types of items. As an example, the items may include groups to which a user may belong, messaging boards in which a user might be interested, question forums, messages between one or more users, interactions with images, stories, videos, comments under a post, or other suitable items. A user may interact with anything that is capable of being represented in Al platform 110. In particular examples, Al platform 110 may be capable of linking a variety of users.

In an example, device 101 may comprise one or more transducers, also referred to herein as one or more sensors, configured to capture contextual information associated with the device 101. The contextual information may include any number of types of data such as: physiological data (e.g., blood pressure, heart rate, heart rate variability, electrocardiogram, blood oxygen level, body temperature, respiratory rate, sleep quality and duration, galvanic skin response, muscle activity, hydration levels, blood glucose levels, lactate levels, electrodermal activity, pulse transit time, arterial stiffness, cardiac output, stroke volume, stress tracking, fatigue tracking, menstrual cycle tracking, fetal heart rate monitoring, or the like), geographical location data (e.g., pace, distance, or the like), time of day, user activity data (e.g., motion, steps, distance, fall detection, or the like), calendar data, weather information, or any combination thereof. In some examples, contextual information may be captured to determine a contextual baseline when Al platform 110 is accessed.

In an example, device 101 may comprise one or more sensors configured to capture contextual information (e.g., data) associated with a user of intelligent watch face system 100. The contextual information may include data associated with blood pressure. In such examples, blood pressure associated with the user may be captured by one or more sensors associated with the device (e.g., device 101). Blood pressure data may be provided to the device 101 via one or more sensors that may capture data associated with determining the blood pressure of the user. In such examples the one or more sensors may comprise one or more of: photoplethysmography (PPG) sensors, pulse transit time (PTT) sensors, electrocardiogram (ECG) sensors, bioimpedance sensors, accelerometers, gyroscopes, or any combination thereof. PPG sensors may be configured to measure data points associated with changes in blood flow and oxygenation, which may allow for the estimation of systolic blood pressure. PTT sensors may be configured to measure data points associated with the time delay between the peak of the pulse wave associated with the heart and the peak of the pulse wave at the wrist, which may allow for determining blood pressure. ECG sensors may be configured to measure data points associated with the electrical activity of the heart, which may allow the device 101 to determine blood pressure. Bioimpedance sensors may be configured to measure data points associated with the electrical resistance of the body, which may be utilized to determine blood pressure. Accelerometers or gyroscopes may be utilized to measure data points associated with the movement or orientation of blood flow, which may allow for calibration of blood pressure measurements. One or more of the sensors as described in this paragraph may be used in combination with any suitable methods to determine (e.g., estimate) blood pressure. In such examples, the one or more sensors may receive contextual data, wherein the contextual may be stored in data store 108 or on a server 107.

It is contemplated that the one or more sensors associated with device 101 may be any suitable sensor associated with the contextual information configured to be assessed (e.g., monitored) by the intelligent watch face system 100. For example, the one or more sensors may be one or more of PPG sensors, electrodes for ECG measurements, PTT sensors, bioimpedance sensors, thermistors or thermocouples for body temperature, accelerometers and gyroscopes for activity tracking, GPS modules for location tracking, electromyography (EMG) sensors for muscle activity, non-invasive optical sensors for blood glucose and lactate levels, electrodermal activity (EDA) sensors for stress levels, facial expression analysis sensors or voice analysis sensors for emotional state, hormone sensors or basal body temperature sensors for women's health tracking, fetal heart rate monitoring sensors for pregnancy tracking, milk volume sensors for breastfeeding tracking, piezoelectric sensors for heart rate monitoring, bioelectrical impedance analysis (BIA) sensors for body composition, electroencephalogram (EEG) sensors for sleep stages and brain activity, galvanic skin response (GSR) sensors for stress levels, or ambient light sensors for sleep tracking. It is contemplated that the one or more sensors described may be used individually or in combination to provide contextual information associated with the user such as heart rate, heart rate variability, electrocardiogram, blood pressure, blood oxygen level, body temperature, respiratory rate, activity levels, GPS tracking, muscle activity, hydration levels, blood glucose levels, lactate levels, sleep duration, sleep quality, sleep stages, sleep disruptions, sleep schedule, workout tracking, exercise recognition, calories burned, distance traveled, pace, cadence, stride length, VO₂ max estimation, stress levels, relaxation levels, mindfulness moments, meditation sessions, emotional state, water intake, caloric intake, macronutrient balance, meal tracking, snack tracking, menstrual cycle tracking, fertility window, pregnancy tracking, breastfeeding tracking, or any other suitable health, fitness, or contextual metrics.

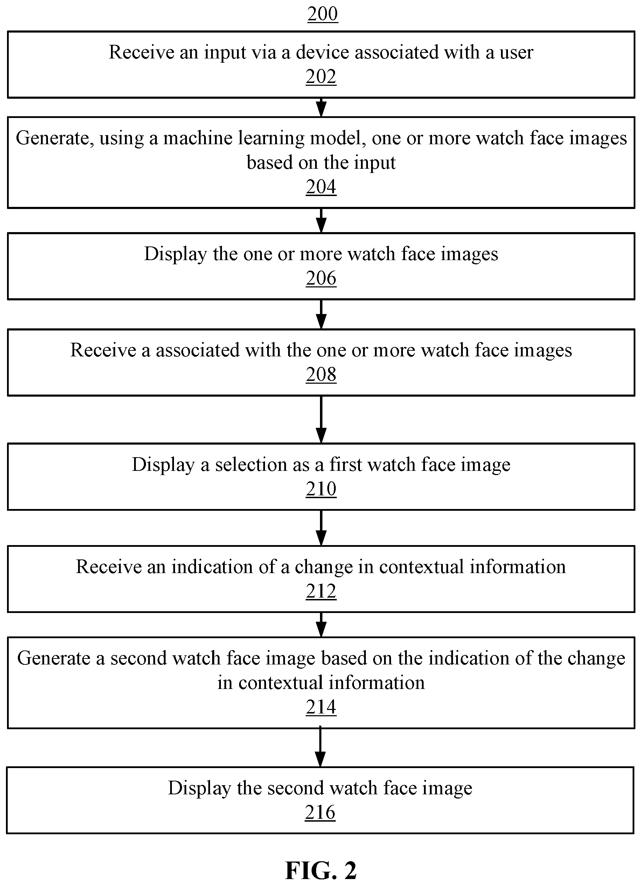

FIG. 2 illustrates a method 200 of generating (e.g., creating) one or more watch face images in accordance with an example of the present disclosure. The method 200 may be performed by a device (e.g., communication device 30, device 101, device 102, or device 103). The device 101, for example, may utilize one or more of processors (e.g., processors 32), memories (e.g., non-removable memory 44, removable memory 46), and/or a memory controller in part to perform the method 200.

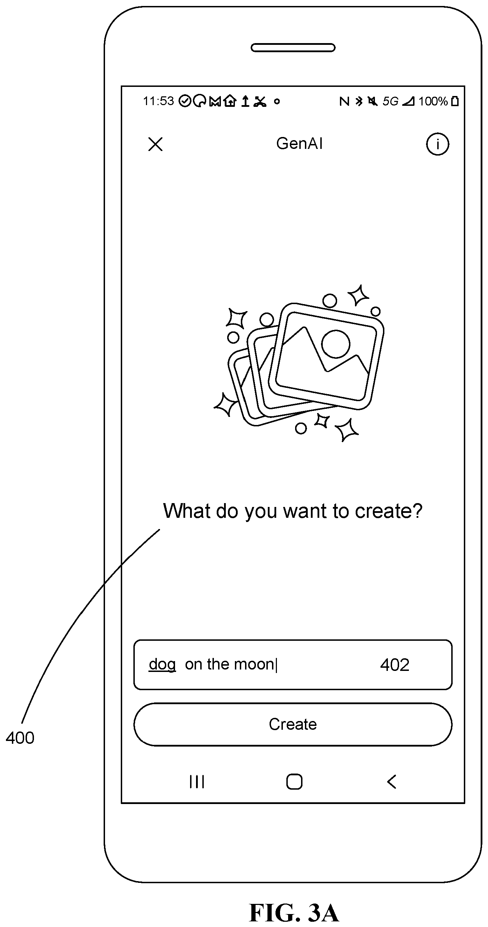

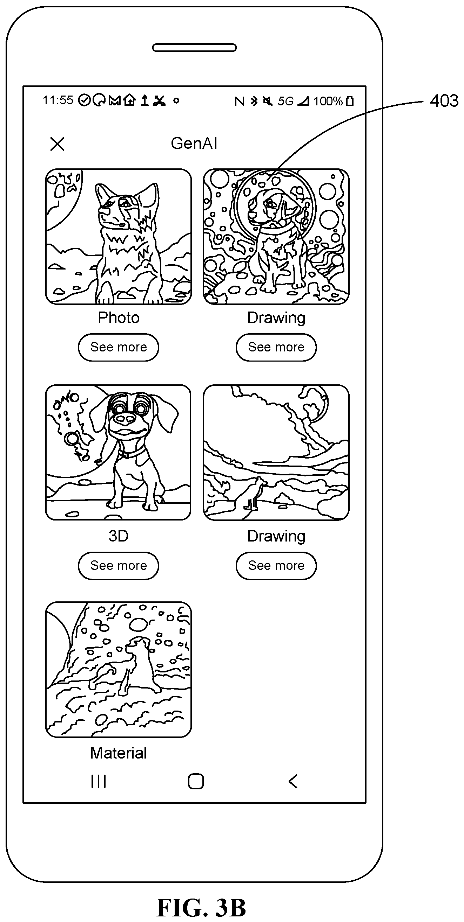

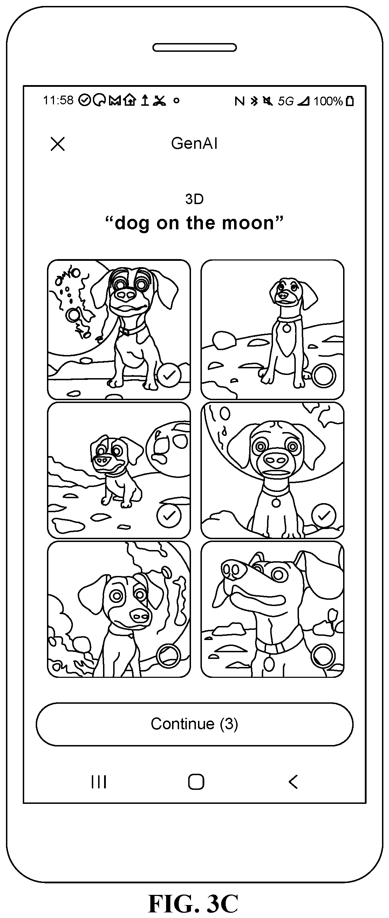

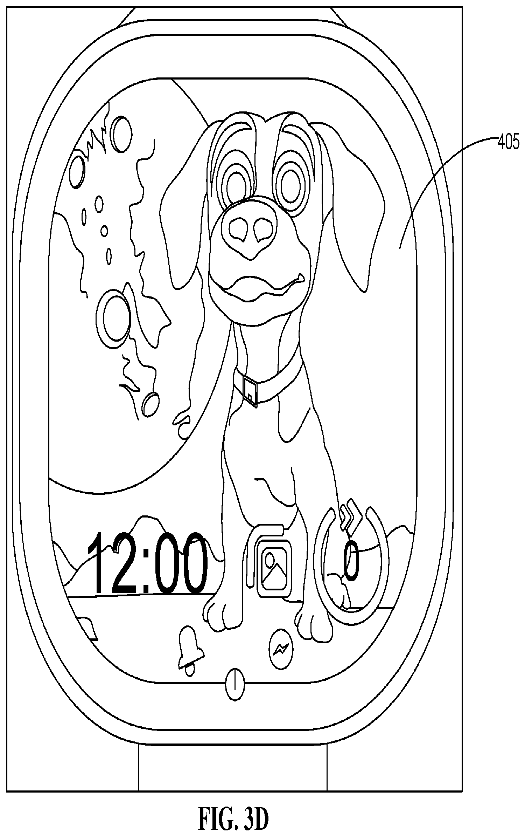

At step 202, an input may be received via a device 101 associated with a user profile. This input may serve as the basis for generating one or more customized watch face images. The input may comprise one or more natural language information (e.g., text, audio, or the like). For example, device 101 may receive text or an audio description, such as "Dog on the moon" in audio or text to request a specific type of watch face image. FIG. 3A may illustrate an example user interface where the input may be received. Note that graphical user interface (GUI) and user interface (UI) are used interchangeably herein. In an example, the graphical user interface 400 may refer to a landing page associated with the Al platform 110, where the user may provide an input 402. The input 402 as illustrated may be a natural language text. FIG. 3B may illustrate an example one or more watch face images 403 generated via a machine learning based on the input 402. FIG. 3C may illustrate one or more watch face images. FIG. 3D may illustrate a selected watch face image 405 associated with device 101.

At step 204, a machine learning model (e.g., machine learning model 510) may be utilized to reference database (e.g., a memory 44 or a data store 108) to generate one or more watch face images associated with a context of the input received. The machine learning model 510 may be configured to utilize the context to fetch (e.g., search) via a data store 108 image-text pairs nearest neighbors to generate a one or more watch face images, wherein the image-text pairs may be associated with training data 520. The machine learning model 510 may utilize a nearest neighbor algorithm, where the machine learning model 510 may represent each image-text pair as a joint embedding. The joint embedding may capture both the visual features of the image and the semantic meaning of the text. In some examples, joint embedding may be obtained through deep learning architectures that combine neural networks (e.g., convolutional neural networks, or the like) for image processing and transformer-based large language models for text processing. The nearest neighbor algorithm may then search for a number of most similar image-text pairs to the context.

The number of most similar image-text pairs may be determined by any suitable method to compare the received input's embedding (e.g., the context) with the embeddings of all image-text pairs in the data store 108. In some examples, a similarity metric may be used to measure how well the context associated with the input received aligns with the meaning of each image-text pair. Based on the similarity metric, the machine learning model 510 may select the top M image-text pairs with the highest similarity scores, wherein 'M' may be any suitable number determined by the Al platform 110, for example, M may be 10 image-text pairs. The top M image-text pairs may be selected and considered the nearest neighbors to the context, and the visual features associated with the top M image-text pairs may be utilized to facilitate the generation of one or more watch face images that may be associated with the context of the input received. The machine learning model 510 may generate one or more watch face images that may be provided via graphical user interface associated with the device 101.

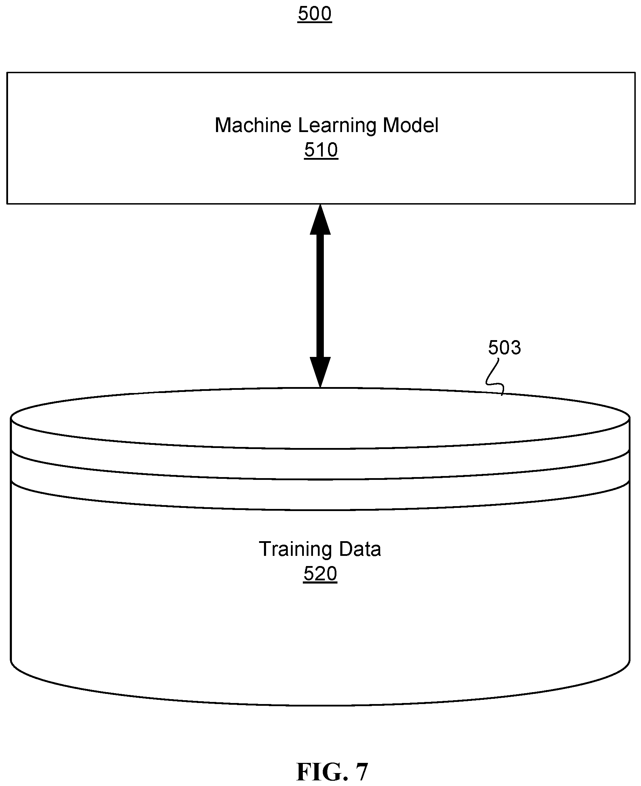

In an example, the step 204 may further include analyzing the input via a machine learning model (e.g., machine learning model 510). The machine learning model 510, via Al, may determine the context associated with the input received at step 202. The context associated with the input received may be determined via a nearest neighbor algorithm (e.g., nearest neighbor application, or nearest neighbor technique) by analyzing the input's semantic meaning and finding the most similar contexts in the training data (e.g., training data 520 of FIG. 7). This may be performed through a process called contextualized embedding, wherein the input is embedding into a high-dimensional vector space, allowing the machine learning model 510 to capture subtle nuances in meaning associated with the input received. The nearest neighbor algorithm may then search for the most similar vectors in the training data 520, which may represent the context(s) that are closest in meaning to the input received. The neighboring contexts are used to inform the model's understanding of the input, enabling the machine learning model 510 to accurately provide a relevant context associated with the received input. It is contemplated that the nearest neighbor algorithm may search for nearest neighbors using a number of different techniques depending on the specific model architecture and training data. The first result (e.g., the context) may be utilized further in the machine learning model 510 or one or more other machine learning model 510s. For example, a user may provide an input such as, "Dog on the Moon." The Al platform 110 may determine, via the machine learning model 510, that the context of the input received may be associated with a dog associated with a moon. In some examples, the input may be analyzed in conjunction with or in addition to a selected media item (e.g., an image provided by the user). Therefore, in response to analysis, a text input of "Dog on the Moon" may cause the system to provide similar one or more watch face images of a dog on the moon as shown in FIG. 3C.

With continued reference to step 204, in an example, the Al platform 110 may determine, via the machine learning model 510, a watch face image associated with a dog on the moon based on the input "Dog on the moon." As such, the machine learning model 510 may generate one or more watch face images via a graphical user interface associated with the device 101. The one or more watch face images generated may be associated with a dog on the moon (e.g., one or more watch face images comprising a dog associated with a moon). One of the one or more watch face images may comprise a different rendition of the input received, such as different art styles (e.g., a 3-dimensional image, a drawing, an animation, photorealistic, illustrative, or the like) associated with the generated watch face images, or the like. A photorealistic image aims to mimic the detail, accuracy, and appearance of a photograph. An illustrative image may be created primarily for artistic expression, storytelling, or conceptual purposes and often incorporates stylization, abstraction, or exaggeration which may not necessarily adhere to realistic proportions or colors. In some examples, the one or more watch face images may be generated based on an analysis in conjunction with or in addition to a received media item (e.g., image, video, or the like).

In some examples, the one or more watch face images may be stored in a memory (e.g., non-removable memory 44, removable memory 46) or database (e.g., data store 108) for future use for a predetermined time period. The predetermined time period may be any suitable increment of time, such as 24 hours, a week, a month, a year, 45 minutes, 50 seconds, or the like. In such examples, one of the one or more watch face images may be saved in the memory 44, wherein the one of the one or more watch face images may be selected (e.g., determined) to be saved or the watch face image may have been used more than a selected threshold of times. The selected threshold may be determined via the Al platform 110 or settings associated with the device 101. It is contemplated that in some examples, that common (e.g., previously presented) context associated with input, the machine learning model 510 may reference a memory 44 or a data store 108 to provide one or more watch face images previously stored. The intelligent watch face system 100 may access data store 108 or other memory 44 to illustrate terms associated with the input (e.g., prompt), potentially creating multiple watch face image options that match the description.

At step 206, one or more watch face images generated in step 204 may be provided via a graphical user interface associated with the device 101. FIG. 3B may illustrate an example user interface associated with the one or more watch face images generated.

At step 208, one or more selections associated with the one or more watch face images may be received, as illustrated in FIG. 3C. In an example, the device 101 which may be associated with Al platform 110 (e.g., a messaging platform, social media platform, native settings application, and/or the like) may receive one or more selections associated with the one or more watch face images. In some examples, in response to one or more selections of the one or more watch face images, a representation may be executed on device 101 to indicate one or more selections of the one or more watch face images that have been selected. The representation may be provided via graphical user interface or any other suitable component of device 101. The representation may include one or more of haptic feedback, highlighting of one of the one or more watch face images, or the like, to convey that one of the one or more watch face images has been selected. In an example, the one or more selections may be associated with a first scenario of one or more scenarios. The one or more scenarios may include (e.g., define) scenes or categories associated with one or more predetermined changes in contextual information. The one or more predetermined changes in contextual information may indicate one or more scenarios associated with weather information, location information, time of day, user activity data, calendar data, blood pressure data, skin temperature data, blood-oxygen data, or heart-rate data. For example, one of the one or more selections may be selected to be associated with a scenario associated with an increased heart rate, wherein the contextual information may be constantly monitored by one or more sensors associated with the device 101.

At step 210, a first selection of the one or more selections associated with the one or more watch face images may be displayed via graphical user interface associated with the device 101. The first selection of the one or more selections may indicate a first watch face image to be used. As disclosed herein the first watch face image may be referenced as an initial watch face image, or a home watch face image (e.g., a watch face image that may be viewed at a contextual baseline or when no change in contextual baseline is determined). The first watch face image may be illustrated in the FIG. 3D.

At step 212, the device 101 may receive, via one or more sensors associated with the device 101, an indication of a change in contextual information. The change in contextual information may be associated with the data (e.g., information) received via the one or more sensors associated with device 101 that may deviate from a contextual baseline. The contextual baseline may comprise a normal contextual information associated with the user, wherein the normal contextual baseline may be defined as one or more of a resting heart rate, a geographical location, a moisture index, blood oxygen level, or the like at a threshold level. The change may indicate any received contextual information deviation from the contextual baseline. In some examples, the change in contextual information may include weather information, location information, time of day, user activity data, calendar data, blood pressure data, skin temperature data, blood-oxygen data, or heart-rate data associated with one or more sensors of the device 101. For example, if it is a sunny day and the weather information indicates that it may rain in the geographical location associated with the device 101, the change in contextual information may reflect the change in weather from sunny to raining.

At step 214, machine learning model 510 may be utilized to generate a second watch face image. The second watch face image may be associated with one or more scenarios associated with one of the one or more selections. The second watch face image may be associated with one of the one or more selections that is related to one of the one or more scenarios associated with the received change in contextual information. For example, the change in contextual information indicates that the user may be exercising. As such, the first image associated with step 210 may be changed (e.g., generated) to the second watch face associated with one of the one or more scenarios (e.g., a watch face image associated with a dog sweating or any other suitable watch face image). The machine learning model 510 may be configured to utilize the contextual information to fetch (e.g., search) via a data store 108 one of the one or more selections associated with one or more scenarios to generate the second watch face image. In an example, the second watch face image may be provided to the user via graphical user interface associated with the device 101. In some examples, the method 200 may further comprise a feedback selection, wherein the feedback selection may be utilized to aid in the training of the machine learning model 510. The feedback selection may be configured to allow the user to approve or disapprove of the one or more watch face images generated. The disclosed method may occur on one device (e.g., device 101) or over a plurality of devices, first watch face image or the second watch face image may be associated with only device 101 (e.g., a smart watch).

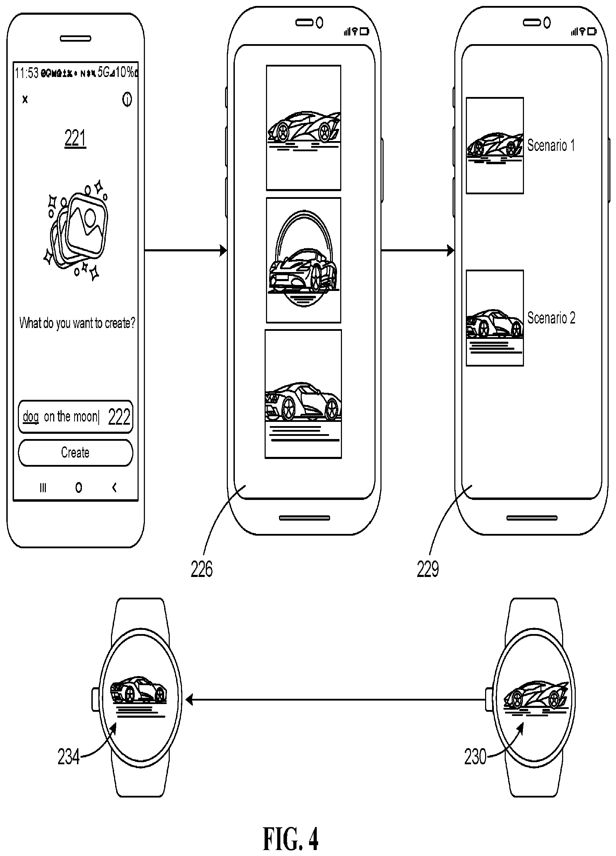

For example, the method 200 may be further illustrated with the FIG. 4. The device (e.g., device 102, 103) may be utilized to provide via graphical user interface 221 that may represent a landing page. An input 222 may be provided, such as "A cool car," to the landing page. As such, the machine learning model 510 may generate one or more watch face images, that may include one or more watch face images associated with a car. The one or more watch face images generated may be displayed via graphical user interface 226. One or more selections may be received associated with the one or more watch face images generated. In response to the one or more selections, a representation may be executed on the device to indicate the one or more selections of the one or more watch faces images generated. The representation associated with the one or more selections may be illustrated in the graphical user interface 226. The one or more scenarios associated with the one or more selections may be indicated as illustrated with user interface 229.

The device 101 may display the first selection of the one or more selections that was indicated as a first watch face image (e.g., a home watch face image or a rest watch face image), as illustrated with the user interface 230. The device 101 may obtain a geographical location of the user, wherein the geographical location may comprise a coordinate location, rate of motion, or any other suitable location information. In an example, the device 101 may monitor location information, thus the device 101 may determine or store, via data store 108 or server 107, a first location information as a contextual baseline associated with the geographical information. The device 101 may receive an indication of a change in contextual information associated the geographical information. For example, the change in contextual information may be associated with one or more sensors receiving data indicating that the device 101 is moving at a high rate of speed in relation to a contextual baseline associated with location information.

As such, the machine learning model 510 may generate (or fetch previously generated) a second watch face image 234 incorporating visual elements representing the obtained geographical information. The second watch face image 234 may be associated with a first scenarios of the one or more scenarios associated with one or more selections (e.g., illustrated with user interface 229). At step 216, the second watch face image 234 may be displayed on a display associated with the device 101.

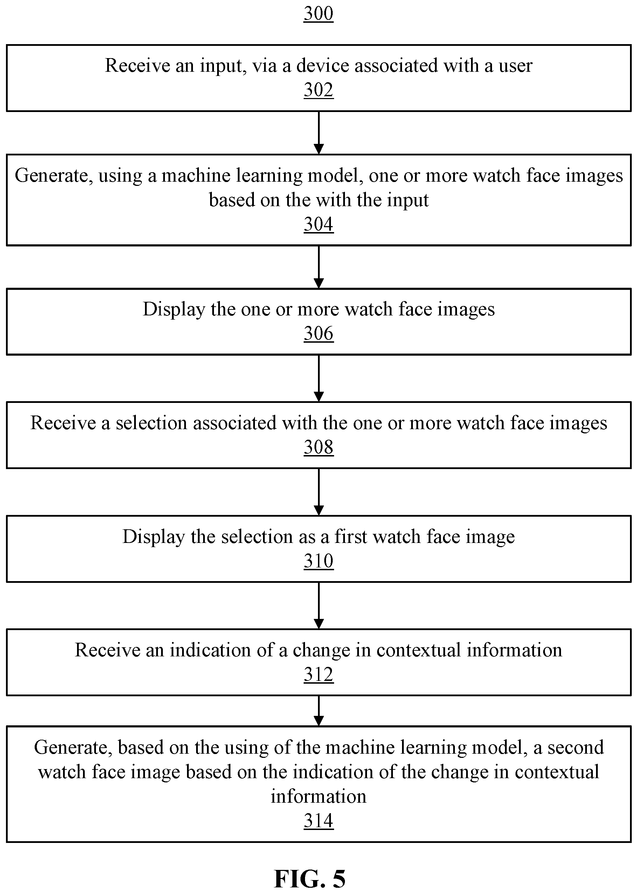

FIG. 5 illustrates a method 300 of intelligent watch face image generation, in accordance with an example of the present disclosure. A device 101 may perform the method 300. At step 302 an input may be received via a device 101 associated with a user profile. This input may serve as the basis for generating one or more customized watch face images. The input may comprise one or more of natural language (e.g., text), audio, or the like.

At step 304, a machine learning model (e.g., machine learning model 510) may be utilized to reference database (e.g., a memory 44 or a data store 108) to generate one or more watch face images associated with a context of the input received. The one or more watch face images generated may be associated with a dog with heart eyes. One of the one or more watch face images may comprise a different rendition of the input received such as different art styles (e.g., a 3-dimensional image, a drawing, an animation, photorealistic, illustrative, or the like). Step 304 may be executed similarly to step 204 of FIG. 2. Similarly to step 204, the step 304 may further include analyzing the input via a machine learning model 510 to determine the context associated with the input received at step 302.

At step 306, one or more watch face images generated in step 304 may be provided via a graphical user interface associated with the device 101. FIG. 3B may illustrate an example user interface associated with the one or more watch face images generated.

At step 308, a selection associated with the one or more watch face images may be received. In an example, the device 101 which may be associated with Al platform 110 (e.g., a messaging platform, social media platform, native settings application, or the like) may receive a selection associated with the one or more watch face images. In some examples, in response to a selection of the one or more watch face images, a representation may be executed on device 101 to indicate the selection of one of the one or more watch face images that have been selected. The representation may be provided via graphical user interface or any other suitable component of device 101. The representation may include one or more of haptic feedback, highlighting of one of the one or more watch face images, or the like, to convey that one of the one or more watch face images have been selected.

At step 310, the selection may be displayed via graphical user interface associated with the device 101. At step 312, an indication of a change in contextual information may be received. The step 312 may be executed similarly to step 212 of FIG. 2. Contextual information may include messaging associated with a social media application or other messaging applications. For example, discussions or images in group chat may be considered and subsequently used for an individual or entire group for the same watch face or similar watch face but slight differences in color or tone.

At step 314, a machine learning model (e.g., machine learning model 510) may be utilized to reference database (e.g., a memory 44 or a data store 108) to generate a second watch face image associated with a context of the input received at step 302 and the change in contextual information at step 312. The machine learning model 510 may be configured to utilize the context and contextual information to fetch (e.g., search) via a data store 108 image-text pairs nearest neighbors to generate a second watch face image, wherein the image-text pairs may be associated with training data 520. In some examples, the contextual information may be converted, via machine learning model 510, to text, similar to a second textual input, to further aid in the generation of the second watch face image. The machine learning model 510 may utilize a nearest neighbor algorithm, where the machine learning model 510 may represent each image-text pair as a joint embedding. The joint embedding may capture both the visual features of the image and the semantic meaning of the text. In some examples, joint embedding may be obtained through deep learning architectures that combine neural networks (e.g., convolutional neural networks, or the like) for image processing and transformer-based large language models for text processing. The nearest neighbor algorithm may then search for a number of most similar image-text pairs to the context.

The number of most similar image-text pairs may be determined by any suitable method to compare the received input's embedding (e.g., the context) with the embeddings of all image-text pairs in the data store 108. In some examples, a similarity metric may be used to measure how well the context associated with the input received aligns with the meaning of each image-text pair. Based on the similarity metric, the machine learning model 510 may select the most similar image-text pair with the highest similarity scores. The most similar image-text pair may be selected and considered the nearest neighbors to the context, and the visual features associated with the most similar image-text pair may be utilized to facilitate the generation of a second watch face image that may be associated with the context of the input received and the change in contextual information. The machine learning model 510 may generate a second watch face image that may be displayed via a graphical user interface associated with the device 101.

With continued reference to step 314, in an example, the Al platform 110 may determine, via the machine learning model 510, a watch face image associated with a dog on the moon based on the input "Dog on the moon." The contextual information may indicate a change in weather information associated with rain. As such, the machine learning model 510 may generate a second watch face image via a graphical user interface associated with the device 101. The second watch face image generated may be associated with a dog on the moon and rain, for example, the second watch face image may be an animated image comprising a dog on the moon with rain drops animated on the image. In some examples, the second watch face image may be generated based on an analysis in conjunction with or in addition to a received media item (e.g., image, video, or the like). In some examples, the second watch face image may be stored in a memory for future use for a predetermined time period. The predetermined time period may be any suitable increment of time, such as 24 hours, a week, a month, a year, 45 minutes, 50 seconds, or the like. In such examples, the second watch face image may be saved in the memory 44. The intelligent watch face system 100 may access data store 108 or other memory 44 to illustrate terms associated with the input (e.g., prompt) or terms associated with the change in contextual information, potentially creating multiple watch face image options that match the description.

It is contemplated that the steps of FIG. 5 or FIG. 2 need not occur iteratively or simultaneously and may occur in any suitable manner that need not be sequential. In some examples, the method 300 or method 200 may further comprise a feedback selection, wherein the feedback selection may be utilized to aid in the training of the machine learning model 510. The feedback selection may be configured to allow for approval or disapproval of the one or more watch face images generated.

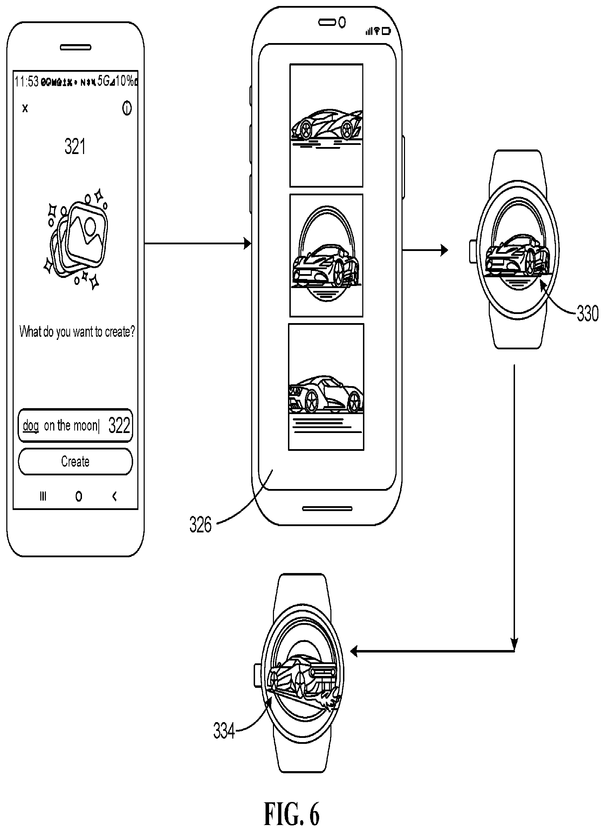

For example, the method 300 may be further illustrated with the FIG. 6. The device (e.g., device 102, 103) may be utilized to provide via graphical user interface a landing page 321. A prompt 322 may be received, such as "A car driving." As such, the machine learning model 510 may generate one or more watch face images. The one or more watch face images generated may be displayed via graphical user interface 326. A selection may be made associated with the one or more watch face images generated. In response to the selection, a representation may be executed on the device to indicate the selection of the one or more watch faces images generated. The representation associated with the selection may be illustrated with graphical user interface 326. The device 101 may display the selection of first watch face image 330. The device 101 may obtain location information associated with the user, wherein the location information may comprise a coordinate location, rate of motion, or any other suitable location information. In an example, the device 101 may constantly monitor (e.g., record) the location information thus allowing the device 101 to store, via data store 108 or server 107, a first location information as a contextual baseline associated with the location information.

The device 101 may receive an indication of a change in contextual information associated the location information. For example, the change in contextual information may be associated with one or more sensors receiving data indicating that the device 101 is moving at a slow rate of speed in relation to a contextual baseline associated with location information. As such, the machine learning model 510 may generate a second watch face image 334 incorporating visual elements representing the obtained geographical information. The second watch face image 334 may be associated the contextual information obtained and the input received. The second watch face image 334 may be displayed on a display associated with the device 101. The second watch face image 334 may be a car with lines or illustrations showing that the car is moving fast, or in some examples the second watch face image 334 may illustrate a car with fire from the rear or other indication of a high level of speed (e.g., a threshold level) to illustrate the contextual information associated with the device 101. In another example, the second watch face 334 may be a car associated with illustrations or other visual elements to illustrate the slow rate of motion. For example, the second watch face image 334 may illustrate the car as a snail or as a toy car to illustrate the contextual information obtained.

It is contemplated that the steps disclosed herein may be performed by one or more functional or physical devices, such as machine learning model 510, device 101, or device 103, or server 107, among others. It is contemplated that the machine learning model 510, as disclosed, may be on or more language models. In an example, the machine learning model 510 may be any suitable large language model.

FIG. 7 illustrates an example framework 500 that may be employed by the system 100 associated with machine learning. The framework 500 may be hosted remotely. Alternatively, the framework 500 may reside within the Al platform 110 as shown in FIG. 1 or be processed by a device (e.g., communication device 30, device 101, device 102, or device 103). The machine learning model 510 may be operably coupled with the stored training data 520 in a training database 503 (e.g., data store 108). In some examples, the machine learning model 510 may be associated with other operations. The machine learning model 510 may implement one or more machine learning model(s) 510 (e.g., a machine learning model 510 associated with step 204, or a machine learning model 510 associated with step 314) or another device (e.g., server 107, device 101, device 102, or device 103).

In another example, the training data 520 may include attributes of thousands of objects. For example, the objects may be smart phones, persons, books, newspapers, news articles, signs, cars, audio, images, movies, TV shows, other videos, other items, or the like. Attributes may include but are not limited to a size, shape, orientation, and position of an object, etc. The training data 520 employed by the machine learning model 510 may be fixed or updated periodically (e.g., by communication device 30). Alternatively, the training data 520 may be updated in real-time based upon the evaluations performed by the machine learning model 510 in a non-training mode. This is illustrated by the double-sided arrow connecting the machine learning model 510 and stored training data 520.

The machine learning model 510 may be designed to determine context associated with a received input. The context may include semantic meanings associated with the received input. The machine learning model 510 may be designed to find similar vector embeddings to the context, associated with the received input, to image-text paired embeddings. The machine learning model 510 may be a large language model to generate representations (e.g., vector spaces), or embeddings, of natural language or visual image data. These machine learning model 510 may be trained (e.g., pretrained and/or trained in real-time) on a vast amount of text data, and/or data capture of a wide range of language patterns and semantic meanings. The machine learning model 510 may understand and represent the context of words, terms, phrases and/or the like in a high-dimensional space, effectively capturing/determining the semantic similarities between different words, contexts, and situations, even when they are not exactly the same. For example, an input associated with "Bike with big wheels" may be associated with another input such as, "Motorcycle with big wheels" which may have been previously determined.

The machine learning model 510 may be designed to develop and predict associations between one or more images and one or more semantic meanings of text. In an example, the machine learning model 510 may utilize training data 520 to develop and predict associations between contextual information, interactions with Al platform 110, previously selected watch face images, context associated with an input, or the like. The training data 520 may be historical data or data associated with one or more media, an input, previous inputs, contextual information, or the like. The training data 520 may further include user profile data, wherein user profile data may comprise one or more of previous inputs, previously used (e.g., selected) watch face images, or the like, associated with a user or a specific "style" associated with the user of one or more users of the Al platform 110. In this example, the training data 520 may include associations between user profile data (e.g., style).

The machine learning model 510 may implement a neural network. The neural network may assist in utilizing training data 520 or assisting with machine learning techniques to analyze the context associated with an input or a change in contextual information and pair the context or the change with image-text pairs that may be associated with historical data. In an example, the neural network may be trained based no historical data indicating joint embeddings between visual features of one or more images and one or more semantic meanings of text. The historical data may include books, movies, news articles, magazines, TV shows, previous watch face image selections of the user or other users, previous inputs, contextual information, or the like. The neural network may be configured to process one or more images using a conventional architecture such as a residual neural network. In some examples, the neural network may have modifications to accommodate specific image processing requirements. The neural network may comprise a transformer-based language model for processing text, which may be modified to accommodate specific text processing requirements associated with the Al platform. The visual and textual embeddings may be combined (e.g., image-text pairs) through a multimodal fusion model, which may enable the model to capture cross-modal relationships between images and text.

In operation, the machine learning model 510 may evaluate associations between an input(s) and a watch face image, or associations between an input(s), contextual information, and a watch face image. For example, an input or contextual information may be compared with respective attributes of stored training data 520 (e.g., prestored objects).

In operation, the machine learning model 510 may evaluate attributes of media, e.g., text, images, videos, audio, or the like obtained by hardware (e.g., devices 101, 102, 103). For example, the attributes of the extracted media (e.g., features from an image(s), video(s), reel(s), post(s), story, and/or text, etc.) may be compared with respective attributes of stored training data 520 (e.g., prestored objects).

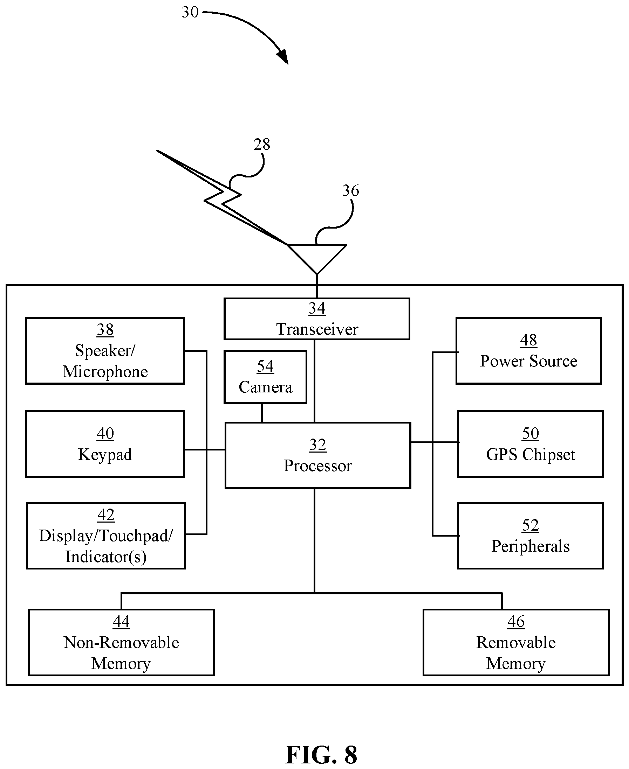

FIG. 8 illustrates a block diagram of an example hardware/software architecture of user equipment (UE) 30. As shown in FIG. 8, the UE 30 (also referred to herein as node 30 or communication device 30) may include a processor 32, non-removable memory 44, removable memory 46, a speaker/microphone 38, a keypad 40, a display, touchpad, and/or indicators 42, a power source 48, a global positioning system (GPS) chipset 50, and other peripherals 52. The UE 30 may also include a camera 54. In an example, the camera 54 is a smart camera configured to sense images appearing within one or more bounding boxes. The UE 30 may also include communication circuitry, such as a transceiver 34 and a transmit/receive element 36. It will be appreciated that the UE 30 may include any subcombination of the foregoing elements while remaining consistent with an example.

The processor 32 may be a special purpose processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. In general, the processor 32 may execute computer-executable instructions stored in the memory (e.g., memory 44 and/or memory 46) of the node 30 in order to perform the various required functions of the node. For example, the processor 32 may perform signal coding, data processing, power control, input/output processing, and/or any other functionality that enables the node 30 to operate in a wireless or wired environment. The processor 32 may run application-layer programs (e.g., browsers) and/or radio access-layer (RAN) programs and/or other communications programs. The processor 32 may also perform security operations such as authentication, security key agreement, and/or cryptographic operations, such as at the access-layer and/or application layer for example.

The processor 32 is coupled to its communication circuitry (e.g., transceiver 34 and transmit/receive element 36). The processor 32, through the execution of computer executable instructions, may control the communication circuitry in order to cause the node 30 to communicate with other nodes via the link 28 to which it is connected.

The transmit/receive element 36 may be configured to transmit signals to, or receive signals from, other nodes or networking equipment. For example, in an example, the transmit/receive element 36 may be an antenna configured to transmit and/or receive radio frequency (RF) signals. The transmit/receive element 36 may support various networks and air interfaces, such as wireless local area network (WLAN), wireless personal area network (WPAN), cellular, and the like. In yet another example, the transmit/receive element 36 may be configured to transmit and receive both RF and light signals. It will be appreciated that the transmit/receive element 36 may be configured to transmit and/or receive any combination of wireless or wired signals.

The transceiver 34 may be configured to modulate the signals that are to be transmitted by the transmit/receive element 36 and to demodulate the signals that are received by the transmit/receive element 36. As noted above, the node 30 may have multimode capabilities. Thus, the transceiver 34 may include multiple transceivers for enabling the node 30 to communicate via multiple radio access technologies (RATs), such as universal terrestrial radio access (UTRA) and Institute of Electrical and Electronics Engineers (IEEE 802.11), for example.

The processor 32 may access information from, and store data in, any type of suitable memory, such as the non-removable memory 44 and/or the removable memory 46. For example, the processor 32 may store session context in its memory, as described above. The non-removable memory 44 may include RAM, ROM, a hard disk, or any other type of memory storage device. The removable memory 46 may include a subscriber identity module (SIM) card, a memory stick, a secure digital (SD) memory card, and the like. In other examples, the processor 32 may access information from, and store data in, memory that is not physically located on the node 30, such as on a server or a home computer.

The processor 32 may receive power from the power source 48 and may be configured to distribute and/or control the power to the other components in the node 30. The power source 48 may be any suitable device for powering the node 30. For example, the power source 48 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 32 may also be coupled to the GPS chipset 50, which may be configured to provide location information (e.g., longitude and latitude) regarding the current location of the node 30. It will be appreciated that the node 30 may acquire location information by way of any suitable location-determination method while remaining consistent with an example.

It is to be appreciated that examples of the methods and apparatuses described herein are not limited in application to the details of construction and the arrangement of components set forth in the following description or illustrated in the accompanying drawings. The methods and apparatuses are capable of implementation in other examples and of being practiced or of being carried out in various ways. Examples of specific implementations are provided herein for illustrative purposes only and are not intended to be limiting. In particular, acts, elements and features described in connection with any one or more examples are not intended to be excluded from a similar role in any other examples.

It is to be understood that the methods and systems described herein are not limited to specific methods, specific components, or to particular implementations. It is also to be understood that the terminology used herein is for the purpose of describing particular examples only and is not intended to be limiting.

Some portions of this description describe the examples in terms of applications and symbolic representations of operations on information. These application descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like. Furthermore, it has also proven convenient at times, to refer to these arrangements of operations as components, without loss of generality. The described operations and their associated components may be embodied in software, firmware, hardware, or any combinations thereof.

Any of the steps, operations, or processes described herein may be performed or implemented with one or more hardware or software components, alone or in combination with other devices. In an example, a software component is implemented with a computer program product comprising a computer-readable medium containing computer program code, which can be executed by a computer processor for performing any or all of the steps, operations, or processes described.

Examples also may relate to an apparatus for performing the operations herein. This apparatus may be specially constructed for the required purposes, and/or it may comprise a computing device selectively activated or reconfigured by a computer program stored in the computer. Such a computer program may be stored in a non-transitory, tangible computer readable storage medium, or any type of media suitable for storing electronic instructions, which may be coupled to a computer system bus. Furthermore, any computing systems referred to in the specification may include a single processor or may be architectures employing multiple processor designs for increased computing capability.

As referred to herein, the term "post" or "posting" may refer to creating and publishing original content on a platform for one or more users to view. Posting may be an act of content creation that may include writing text, uploading images or videos, or sharing links. In some instances, posting makes the content visible to a specific audience or the public.

As referred to herein, the term "share" or "sharing" may refer to the act of redistributing existing content to amplify the reach and visibility of existing content. In some instances, sharing may involve taking content created by oneself or others and disseminating it through various online channels, often with added personal commentary or context.

The terms as referred to herein "posting" and "sharing" may differ primarily in their origin and purpose. In an example, posting may generally involve creating new content and initiating conversations, while sharing may focus on amplifying existing content and participating in ongoing discussions. In some instances, posting may require more effort in content creation, whereas sharing can be a quicker way to engage with and spread information across platforms or networks. In some instances, posting and sharing may be used interchangeably.

As referred to herein, the term "story" or "stories" may refer a content item associated with a social media platform that may allow one or more users to share one or more images, photos, videos, or the like, that may be visible for a limited time. In an example, the limited time may be 24 hours, but it is contemplated that the limited time may be any suitable increment of time. In an example, stories may often appear at the top of a user's feed and may include various enhancements to one or more images, photos, or videos shared. The enhancements may be one or more of filters, stickers, text, or the like, or any combination thereof.

As used herein, the terms "data," "content," "information" and similar terms may be used interchangeably to refer to data capable of being transmitted, received and/or stored in accordance with examples of the disclosure. Moreover, the term "exemplary," as used herein, is not provided to convey any qualitative assessment, but instead merely to convey an illustration of an example. Thus, use of any such terms should not be taken to limit the scope of examples of the disclosure.

As defined herein a "computer-readable storage medium," which refers to a non-transitory, physical, or tangible storage medium (e.g., volatile, or non-volatile memory device), may be differentiated from a "computer-readable transmission medium," which refers to an electromagnetic signal.

As referred to herein, an "application" may refer to a computer software package that may perform specific functions for users and/or, in some cases, for another application(s). An application(s) may utilize an operating system (OS) and other supporting programs to function. In some examples, an application(s) may request one or more services from, and communicate with, other entities via an application programming interface (API). It is contemplated herein that "users" and "device" are often used interchangeably.

As referred to herein, "artificial reality" may refer to a form of immersive reality that has been adjusted in some manner before presentation to a user, which may include, for example, a virtual reality, an augmented reality, a mixed reality, a hybrid reality, Metaverse reality or some combination or derivative thereof. Artificial reality content may include completely computer-generated content or computer-generated content combined with captured (e.g., real-world) content. In some instances, artificial reality may be associated with applications, products, accessories, services, or some combination thereof, that may be used to, for example, create content in an artificial reality or are otherwise used in (e.g., to perform activities in) an artificial reality.

As referred to herein, "artificial reality content" may refer to content such as video, audio, haptic feedback, or some combination thereof, any of which may be presented in a single channel or in multiple channels (such as stereo video that produces a three-dimensional (3D) effect to the viewer) to a user.

As referred to herein, a Metaverse may denote an immersive virtual space or world in which devices may be utilized in a network in which there may, but need not, be one or more social connections among users in the network or with an environment in the virtual space or world. A Metaverse or Metaverse network may be associated with three-dimensional (3D) virtual worlds, online games (e.g., video games), one or more content items such as, for example, images, videos, non-fungible tokens (NFTs) and in which the content items may, for example, be purchased with digital currencies (e.g., cryptocurrencies) and other suitable currencies. In some examples, a Metaverse or Metaverse network may enable the generation and provision of immersive virtual spaces in which remote users may socialize, collaborate, learn, shop and/or engage in various other activities within the virtual spaces, including through the use of Augmented/Virtual/Mixed Reality.

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

The foregoing description of the examples has been presented for the purpose of illustration; it is not intended to be exhaustive or to limit the patent rights to the precise forms disclosed. Persons skilled in the relevant art can appreciate that many modifications and variations are possible in light of the disclosure.

The scope of this disclosure encompasses all changes, substitutions, variations, alterations, and modifications to the example examples described or illustrated herein that a person having ordinary skill in the art would comprehend. The scope of this disclosure is not limited to the example examples described or illustrated herein. Moreover, although this disclosure describes and illustrates respective examples herein as including particular components, elements, feature, functions, operations, or steps, any of these examples may include any combination or permutation of any of the components, elements, features, functions, operations, or steps described or illustrated anywhere herein that a person having ordinary skill in the art would comprehend. Furthermore, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative. Additionally, although this disclosure describes or illustrates particular examples as providing particular advantages, particular examples may provide none, some, or all of these advantages.

The language used in the specification has been principally selected for readability and instructional purposes, and it may not have been selected to delineate or circumscribe the inventive subject matter. It is therefore intended that the scope of the patent rights be limited not by this detailed description, but rather by any claims that issue on an application based hereon. Accordingly, the disclosure of the examples is intended to be illustrative of the scope of the patent rights, which is set forth in the following claims.

A method, system, or apparatus may provide for receiving an input, via a device associated with a user; generating, using a machine learning model, one or more watch face images based on the input; displaying the one or more watch face images; receiving one or more selections associated with the one or more watch face images; displaying the first selection of the one or more selections as a first watch face image; receiving an indication of a change in contextual information; generating a second watch face image based on the indication of the change in contextual information; and displaying the second watch face image. The input may comprise comprises natural language text or natural language audio describing user desired characteristics associated with the one or more watch face images. The one or more watch face images generated may include one or more photorealistic watch face images; and one or more illustrative watch face images. The method, system, or apparatus may further use a machine learning model to analyze context of the input received. The one or more selections may be associated with one or more scenarios. The one or more scenarios may define scenes, categories of objects, events, contexts, environments, conditions, or the like associated with one or more predetermined changes in contextual information. The one or more predetermined changes in contextual information may indicate one or more scenarios associated with weather information, location information, time of day, user activity data, calendar data, blood pressure data, skin temperature data, blood-oxygen data, and heart-rate data. The change in contextual data may be based on capturing a contextual baseline, wherein the contextual baseline is associated with contextual information associated with the user associated with a profile; obtaining a set of contextual information, in real-time, wherein the set of contextual information comprises one or more datapoints associated with one or more sensors configured to capture contextual information; and comparing the set of contextual information to the contextual baseline. A system or apparatus may include: a display; one or more processors; one or more sensors configured to capture contextual information. It is contemplated that the subject matter may include watch face designs, backgrounds, or the like. The system may generate matching watch faces for multiple devices (e.g. 1^{st} watch and 2^{nd} watch) based on an input (e.g., contextual information or instructions) of user or group of users (e.g., associated with a group chat). The system can extract color palettes and design elements from photos or other images associated with a user or group of users to incorporate into generated watch faces. The system can extract color palettes and design elements from photos taken by the user to incorporate into generated watch faces. All combinations (including the removal or addition of steps) in this paragraph and the above paragraphs are contemplated in a manner that is consistent with the other portions of the detailed description.

The change in the contextual information may indicate a change associated with weather information, wherein generating the second watch face image may comprise: obtaining weather condition for a location associated with the user; referencing the first selection of the one or more selections that corresponds to first scenario of one or more scenarios associated with the weather condition; and displaying the second watch face image, associated with the first selection of the one or more selections that correspond to first scenario of one or more scenarios. The change in contextual information may indicate a change associated with location information, wherein generating the second watch face image may comprise: obtaining a geographic location of the user; referencing the first selection of the one or more selections that corresponds to first scenarios of the one or more scenarios associated with the geographical location associated with the user; and displaying the second watch face image, associated with the first selection of the one or more selections that correspond to the first scenario of one or more scenarios. The change in contextual information may indicate a change associated with a time of day, wherein generating the second watch face image may comprise: determining the time of day; referencing the first selection of the one or more selections that corresponds to the first scenario of the one or more scenarios associated with the time of day; and displaying the second watch face image, associated with the first selection of the one or more selections that correspond to the first scenario of one or more scenarios. All combinations (including the removal or addition of steps) in this paragraph and the above paragraphs are contemplated in a manner that is consistent with the other portions of the detailed description.

The change in contextual information may indicate a change associated with user activity data, wherein generating the second watch face image may comprise: detecting a physical activity of the user wearing the device; referencing first selection of the one or more selections that corresponds to the first scenario of the one or more scenarios associated with the detected physical activity; and displaying the second watch face image, associated with the first selection of the one or more selections that correspond to the first scenario of one or more scenarios. The change in contextual information may indicate a change associated with calendar data, wherein generating the second watch face image may comprise: accessing calendar data associated with the user of the device; referencing the first selection of the one or more selections that corresponds to the first scenario of the one or more scenarios associated with an upcoming calendar event; and displaying the second watch face image, associated with the first selection of the one or more selections that correspond to the first scenario of one or more scenarios. All combinations (including the removal or addition of steps) in this paragraph and the above paragraphs are contemplated in a manner that is consistent with the other portions of the detailed description.

A method, system, or apparatus may provide for receiving an input, via a device associated with a user; using a machine learning model to generate one or more watch face images based on the input; displaying the one or more watch face images; receiving a selection associated with the one or more watch face images; displaying the selection as a first watch face image; receiving an indication of a change in contextual information; generating, based on the using of the machine learning model, a second watch face image based on the indication of the change in contextual information; and displaying the second watch face image. The second watch face may be an updated first watch face image comprising visual elements of the change in contextual information indicated. All combinations (including the removal or addition of steps) in this paragraph and the above paragraphs are contemplated in a manner that is consistent with the other portions of the detailed description.

A system or apparatus may comprise: a display; one or more processors; one or more sensors configured to capture contextual information; and memory storing instructions that, when executed by the one or more processors, cause the device to: receiving an input, via the device associated with a user; generating, using a machine learning model, one or more watch face images based on the input; displaying the one or more watch face images; receiving one or more selections associated with the one or more watch face images; displaying the first selection of the one or more selections as a first watch face image; receiving an indication of a change in contextual information; generating a second watch face image based on the indication of the change in contextual information; and displaying the second watch face image. The contextual information may be associated with one or more devices (smartwatch, mobile phone, or vehicle associated with a user profile. The contextual information may comprise one or more of: weather information, location information, time of day, user activity data, calendar data, blood pressure data, skin temperature data, blood-oxygen data, and heart-rate data. The memory storing instructions that cause the device to detect a change in contextual information may be based on: capturing a contextual baseline, wherein the contextual baseline is associated with contextual information associated with the user associated with a profile; obtaining a set of contextual information, in real-time, wherein the set of contextual information comprises one or more datapoints captured using the one or more sensors; and comparing the set of contextual information to the contextual baseline. All combinations (including the removal or addition of steps) in this paragraph and the above paragraphs are contemplated in a manner that is consistent with the other portions of the detailed description.

A system or apparatus may comprise: a display; one or more processors; one or more sensors configured to capture contextual information; and memory storing instructions that, when executed by the one or more processors, cause the device to: receiving an input, via the device associated with a user; generating, using a machine learning model, one or more watch face images based on the input; displaying the one or more watch face images; receiving a selection associated with the one or more watch face images; displaying the selection as a first watch face image; receiving an indication of a change in contextual information; generating, based on the using of the machine learning model, a second watch face image based on the indication of the change in contextual information; and displaying the second watch face image. All combinations (including the removal or addition of steps) in this paragraph and the above paragraphs are contemplated in a manner that is consistent with the other portions of the detailed description.

## Claims

1. A method comprising:
receiving an input via a device associated with a user;
generating, using a machine learning model, one or more watch face images based on the input;
displaying the one or more watch face images;
receiving a selection associated with the one or more watch face images;
displaying the selection as a first watch face image;
receiving an indication of a change in first contextual information;
generating, using the machine learning model, a second watch face image based on the indication of the change in the first contextual information; and
displaying the second watch face image.

2. The method of claim 1, wherein the input comprises natural language text or natural language audio describing characteristics associated with the one or more watch face images.

3. The method of claim 1 or 2, wherein the one or more watch face images comprises:
one or more photorealistic watch face images, or
one or more illustrative watch face images.

4. The method of any preceding claim, wherein the second watch face image is displayed on a smartwatch.

5. The method of any preceding claim, wherein the change in the first contextual information is based on:
capturing a contextual baseline associated with a user profile;
obtaining second contextual information, wherein the second contextual information comprises data associated with one or more sensors; and
comparing the second contextual information to the contextual baseline.

6. The method of any preceding claim, wherein the second watch face image is an updated first watch face image that incorporates one or more visual elements associated with the change in the first contextual information.

7. The method of any preceding claim, wherein the change in the first contextual information indicates a change associated with weather information.

8. The method of any preceding claim, wherein the change in the first contextual information indicates a change associated with location information.

9. The method of any preceding claim, wherein the change in the first contextual information indicates a change associated with a time of day, user activity data, or calendar data.

10. The method of any preceding claim, wherein the first contextual information comprises: blood pressure data, skin temperature data, blood-oxygen data, or heart-rate data.

11. An apparatus comprising:
one or more processors; and
at least one memory storing instructions, that when executed by the one or more processors, cause the apparatus to carry out the method of any preceding claim.

12. A computer-readable medium storing instructions that, when executed by a processor, cause the processor to carry out the method of any of claims 1 to 10.

13. A computer program product comprising instructions which, when the program is executed by a computer, cause the computer to carry out the method of any of claims 1 to 10.
